# EUROPÄISCHE PATENTSCHRIFT

(11) **EP 1 169 848 B1**
(45) Veröffentlichungstag und Bekanntmachung des Hinweises auf die Patenterteilung: **04.06.2003**
(21) Anmeldenummer: 00920701.0
(22) Anmeldetag: 13.04.2000
(51) Int. Cl.: H04N 1/21, H04N 1/00

(54) **VERFAHREN ZUR HERSTELLUNG EINES BILDMOTIVS AUF EINEM BILDMATERIAL**
METHOD FOR PRODUCING AN IMAGE MOTIF ON AN IMAGE MATERIAL
PROCEDE POUR PRODUIRE UN MOTIF D'IMAGE SUR UN SUPPORT D'IMAGE

(30) Priorität: 13.04.1999 DE 19916524
(43) Veröffentlichungstag der Anmeldung: 09.01.2002
(73) Patentinhaber: Strehler, Heike, 71063 Sindelfingen (DE)
(72) Erfinder: Strehler, Heike, 71063 Sindelfingen (DE)
(74) Vertreter: Schäfer, Wolfgang, Dipl.-Ing.
(86) Internationale Anmeldenummer: EP0003325
(87) Internationale Veröffentlichungsnummer: WO00062527

(56) Entgegenhaltungen:
- EP-A- 0 878 956
- EP-A- 0 889 636
- US-A- 4 873 643
- US-A- 5 327 265
- US-A- 5 930 810

## Beschreibung

Die Erfindung betrifft ein Verfahren zur Herstellung eines Bildmotivs auf einem Bildmaterial, z.B. auf Papier, Leinwand, Textil usw..

Es ist bekannt, dass die Qualität eines bspw. auf Papier gedruckten Bildes sehr stark von dem gewählten Druckverfahren und insbesondere auch von dessen Auflösung abhängt. Dabei sind zur Herstellung qualitativ hochwertiger Reproduktionen relativ aufwendige Verfahren und kostenintensive Druckmaschinen erforderlich. Die zu druckenden Bilder liegen dabei in der Form von digitalen Daten vor. Nur bei einer hohen Auflösung und einer damit verbundenen großen Datenmenge ist die erwünschte hohe Qualität des gedruckten Bildes erreichbar. Dies erfordert den Einsatz von größeren und leistungsstärkeren Rechenanlagen.

Eine andere Möglichkeit besteht darin, dass ein Bild in einer geringeren Auflösung vorliegt und damit auf einem handelsüblichen Personalcomputer bearbeitet und auf einem üblichen Drucker ausgedruckt werden kann. Derartige Bilder besitzen zwangsläufig aufgrund der geringeren Auflösung eine geringere Qualität. Die geringere Auflösung ermöglicht jedoch, dass die Bilder - wie gesagt - von einem handelsüblichen Personalcomputer mit geringem Aufwand bearbeitet werden können.

Der Vorteil der zuerst beschriebenen, hochwertigen Bilder besteht somit in der hohen Druckqualität. Der Nachteil dieser Bilder besteht jedoch in der Tatsache, dass aufgrund der großen Datenmenge eine Verarbeitung auf handelsüblichen Personalcomputern kaum oder nur unter erhöhtem Einsatz an Rechnerleistung möglich ist. Im Unterschied dazu besteht der Vorteil von Bildern mit geringerer Auflösung gerade in der Möglichkeit einer derartigen relativ schnelleren Verarbeitung auf handelsüblichen Personalcomputern. Die Druckqualität derartiger Bilder mit geringerer Auflösung ist jedoch qualitativ geringer.

Aus der EP-A-0 878 956 ist ein Verfahren zum Editieren von Bildern bekannt. Die Bilder eines Nutzers werden vom Händler eingescannt und über das Internet in geringer Auflösung dem Nutzer wieder zugänglich gemacht. Diese Bilder können editiert werden und in vorgefertigte Vorlagen eingefügt und mit Text versehen werden, um beispielsweise ein Photoalbum zusammenzustellen. Der Anbieter führt die gleiche Bildverarbeitung noch mal mit den Bildern hoher Auflösung durch und druckt sie aus.

US-A-4 873 643 zeigt ein interaktives Design-Gerät zum Herstellen von bedruckten Artikeln. Der Anwender wird durch eine Anzahl vorgegebener Auswahlmöglichkeiten, z. B. Auswahl und Editieren des Typs und der Größe eines Artikels, Auswahl der Design-Elemente, Auswahl des Ortes, des Layouts und des Textes bzw. der Textart geführt. Die vom Benutzer gemachte Auswahl wird auf Widersprüche untersucht.

US-A-5 327 265 zeigt eine Bilddatenbank, die über ein Modem zugänglich gemacht wird. Bilder unterschiedlicher Auflösung mit Text sind auf optischen Datenträgern gespeichert und können über die Telefonleitung angewählt werden.

Aufgabe der Erfindung ist es, ein Verfahren zur Herstellung eines Bildmotivs auf einem Bildmaterial, z.B. auf Papier, Leinwand, Textil usw., zu schaffen, das einerseits die benutzerfreundliche Verarbeitung der Bilder auf einem handelsüblichen Personalcomputer sowie andererseits die Herstellung qualitativ hochwertiger Bilder ermöglicht.

Diese Aufgabe wird bei einem Verfahren der eingangs genannten Art mit den folgenden Schritten gelöst:
Ein Anbieter stellt auf einem Personalcomputer oder im Internet eine Mehrzahl von Ursprungsbildern in einer niedrigen Auflösung zur Verfügung,
ein Nutzer erstellt auf dem Personalcomputer oder über das Internet aus mehreren Ursprungsbildern nach seinen persönlichen Vorstellungen ein neues Bildmotiv in niedriger Auflösung,
dem neu erstellten Bildmotiv zugehörige Bild- und/oder Prozessdaten werden an den Anbieter oder an einen Dritten zur Herstellung des neu erstellten Bildmotivs übermittelt,
der Anbieter oder der Dritte stellt das von dem Nutzer neu erstellte Bildmotiv auf der Grundlage der übermittelten Bildund/oder Prozessdaten sowie von Originaldaten hoher Auflösung der dem Nutzer angebotenen Ursprungsbilder in einer hohen Auflösung auf dem Bildmaterial her.

Durch die Erfindung wird die benutzerfreundliche Verarbeitung der Bilder auf einem Personalcomputer mit der Möglichkeit eines qualitativ hochwertigen Drucks der Bilder kombiniert. Dabei ist es möglich, dass der Personalcomputer als sogenannte stand-alone-Lösung vorgesehen ist, oder dass der Personalcomputer an das Internet angeschlossen ist und damit die gesamte Verarbeitung über das Internet stattfindet.

Ebenfalls ist es möglich, dass die Erfindung in der Form von Daten und/oder Programmen auf einem Datenträger abgespeichert ist.

Die Verarbeitung der Ursprungsbilder wird - unabhängig davon, ob dies auf dem Personalcomputer als solchen oder über das Internet erfolgt - vorzugsweise in einer niedrigen Auflösung der Ursprungsbilder durchgeführt. Damit wird erfindungsgemäß erreicht, dass der Nutzer ohne größeren Aufwand, insbesondere auf einem handelsüblichen Personalcomputer, die von dem Anbieter angebotenen Ursprungsbilder ohne weiteres verarbeiten kann. Aufgrund der niedrigen Auflösung der Ursprungsbilder ist die zu speichernde und insbesondere die zu verarbeitende Datenmenge gering. Dies bringt den Vorteil mit sich, dass insbesondere die erforderliche Verarbeitungszeit klein ist und damit die gesamte Verarbeitung auch über das Internet erfolgen kann. Bei der Verarbeitung der angebotenen Ursprungsbilder ist es möglich, dass der Nutzer aus mehreren Ursprungsbildern - entweder auf dem stand-alone-Personalcomputer oder über das Internet - ein neues Bildmotiv erstellt, das seinen persönlichen Vorstellungen entspricht. Diese Verarbeitung der angebotenen Ursprungsbilder erfolgt dabei - wie gesagt - auf der Grundlage der niedrigen Auflösung.

Ist dann das von dem Nutzer erwünschte Bildmotiv vorhanden, so wird darauf von dem Anbieter oder von einem Dritten ein Bildprodukt hoher Qualität hergestellt. Dies wird erfindungsgemäß dadurch erreicht, dass der Anbieter oder der Dritte bei der Herstellung nicht die geringe Auflösung des erwünschten Bildmotivs verwendet, sondern eine hohe Auflösung. Mit Hilfe der hohen Auflösung wird dann die qualitativ hochwertige Bildqualität erreicht.

Die Übermittlung der Bild- und/oder Prozessdaten kann auf vielerlei Arten erfolgen. Handelt es sich um einen stand-alone-Personalcomputer, so kann die Übermittlung bspw. dadurch erfolgen, dass der Nutzer die Bild- und/oder Prozessdaten seines Bildmotivs auf einem Datenträger, bspw. einer Diskette abspeichert und dem Anbieter oder dem Dritten zusendet. Ggf. ist bei einem derartigen stand-alone-Personalcomputer auch eine Übermittlung an den Anbieter oder den Dritten per e-mail möglich. Wird die gesamte Erfindung jedoch mittels des Internets realisiert, so ist es besonders vorteilhaft, wenn die Übermittlung ebenfalls über das Internet erfolgt. In diesem Fall genügt es ggf., wenn der Nutzer die zu seinem Bildmotiv zugehörigen Bild- und/oder Prozessdaten bspw. durch die Vergabe eines Auftrags o.dgl. auf dem Internet belässt, wo die Bild- und/oder Prozessdaten dann von dem Anbieter oder dem Dritten zur Herstellung des erwünschten Ausdrucks abgeholt werden. Im letztgenannten Fall ist es damit möglich, dass der Nutzer die gesamte Erstellung des von ihm erwünschten Bildmotivs, wie auch die Auftragsvergabe zur Herstellung des Ausdrucks über das Internet, also on-line durchführt.

Dem Anbieter oder dem Dritten liegen die ursprünglich dem Nutzer zur Verfügung gestellten Ursprungsbilder nicht nur in der niedrigen Auflösung, sondern auch als Originaldaten mit einer hohen Auflösung vor. Der Anbieter oder Dritte benutzt nunmehr die Ursprungsbilder in der hohen Auflösung, um den qualitativ hochwertigen Ausdruck des von dem Nutzer erwünschten Bildmotivs herzustellen. Die Herstellung erfolgt dabei auf der Grundlage der dem Anbieter oder dem Dritten übermittelten Bild- und/oder Prozessdaten. Handelt es sich bei den Bild- und/oder Prozessdaten bspw. um die zeitliche Abfolge der Veränderungen, Kombinationen, Ergänzungen usw., die der Nutzer an einem oder mit mehreren Ursprungsbildern durchgeführt hat, so werden diese Veränderungen usw. nunmehr von dem Anbieter oder dem Dritten nochmals durchgeführt, jedoch nicht auf der Grundlage der niedrigen Auflösung, sondern mit der vorliegenden hohen Auflösung. Hierzu ist bei dem Anbieter oder dem Dritten eine Rechenanlage vorhanden, die zur Verarbeitung der Datenmengen geeignet ist, die sich aus den hohen Auflösungen ergeben. In ähnlicher Weise ist es möglich, dass, wenn als Bilddaten nur das endgültig von dem Nutzer erwünschte Bildmotiv in der niedrigen Auflösung vorliegt, bei dem Anbieter oder dem Dritten eine Umsetzung dieser niedrigen Auflösung in eine hohe Auflösung erfolgt. Auch hierzu können wieder die Ursprungsbilder in der hohen Auflösung herangezogen werden. Unabhängig von der Vorgehensweise entsteht dadurch bei dem Anbieter oder dem Dritten das von dem Nutzer erstellte und erwünschte Bildmotiv in einer hohen Auflösung. Mit dieser hohen Auflösung kann dann das Bildmotiv qualitativ hochwertig bspw. auf Papier ausgedruckt werden. Ebenfalls ist es möglich, das Bildmotiv mit der hohen Auflösung auf eine Leinwand, Textil oder auf ein sonstiges Bildmaterial aufzutragen oder in diesem Material auszuführen.

Wie erwähnt, wird durch die Erfindung also die Möglichkeit einer einfachen Verarbeitung von Bildern mit einer geringen Auflösung und die Möglichkeit der Herstellung von Bildern mit einer hohen Auflösung miteinander kombiniert. Der gesamte Vorgang kann dabei entweder an einem üblichen Personalcomputer durchgeführt werden, oder es ist möglich, dass der gesamte Vorgang über das Internet abgewickelt wird.

Ein weiterer Vorteil der Erfindung besteht darin, dass dem Nutzer eine Vielzahl hochwertiger Bildmotive in digitalisierter Form mit niedriger Auflösung zur eigenen Gestaltung verfügbar gemacht werden, die er an einem herkömmlichen Personalcomputer ohne größeren Aufwand nach seinen Vorstellungen bearbeiten kann, und von denen er anschließend hochwertige Druckreproduktionen erhält. Durch die Zurverfügungstellung der Ursprungsbilder mit niedriger Auflösung wird erreicht, dass im Internet oder auf einem anderen Datenträger nur eine geringe Speicherkapazität pro Bildmotiv verbraucht wird, so dass eine sehr große Anzahl unterschiedlicher Bildmotive bei einem relativ geringeren Verbrauch von Speicher- und Leitungskapazität verfügbar gemacht werden kann.

Der Vorteil bei einer Umsetzung der Erfindung über das Medium Internet besteht darin, dass die Galerie der Ursprungsbilder in niedriger Auflösung sehr kurzfristig und ohne größeren Aufwand verändert und aktualisiert werden kann, insbesondere müssen nicht bei jeder Aktualisierung neue Datenträger hergestellt und versandt werden, wie dies bei der Realisierung über externe Speichermedien der Fall ist. Dies stellt eine erhebliche Kostenreduktion dar. Für den Nutzer ergibt sich der Vorteil, dass er immer die aktuellsten Bildmotive zur persönlichen Bearbeitung zur Verfügung gestellt bekommt.

Alternativ oder zusätzlich ist es möglich, dass - völlig unabhängig von der Auflösung der Ursprungsbilder und des herzustellenden Bildprodukts - das Bildprodukt mit großen Abmessungen hergestellt wird. Damit kann der Nutzer ein von ihm erwünschtes Bildmotiv an dem stand-alone-Personalcomputer oder über das Internet erstellen, um danach das Bildmotiv mit großen Abmessungen von dem Anbieter oder dem Dritten drucken zu lassen. Die Auflösung der Ursprungsbilder kann dabei vorzugsweise niedrig und die Auflösung des Bildprodukts hoch sein. Der Vorteil dieser Möglichkeit besteht darin, dass der Nutzer das Bildprodukt in einem großen Bildformat herstellen lassen kann, das üblicherweise von dem Nutzer selbst nicht ausgedruckt werden kann. Diese Alternative bzw. dieser Zusatz kann auch eine eigene, von der Auflösung unabhängige Erfindung darstellen.

Bei einer vorteilhaften Weiterbildung der Erfindung stellt der Anbieter dem Nutzer auf dem Personalcomputer oder über das Internet eine Software zur Verfügung, mit der die Ursprungsbilder zur Erstellung des Bildmotivs verändert, kombiniert, ergänzt, usw. werden können.

Damit wird dem Nutzer die Möglichkeit eingeräumt, aus den zur Verfügung gestellten Ursprungsbildern in beliebiger Art und Weise ein Bildmotiv nach seinen eigenen persönlichen Vorstellungen zu erstellen. Bei der Software kann es sich dabei um eine übliche Software zur digitalen Bildbearbeitung handeln, im Folgenden und in der Zeichnung kurz als sogenannte Grafik-Software bezeichnet, die auf handelsüblichen Personalcomputern lauffähig ist. Ist die Erfindung auf einem stand-alone-Personalcomputer realisiert, so ist diese Software auf diesem Personalcomputer installiert, so dass der Nutzer die Software unmittelbar verwenden kann. Wird die Erfindung hingegen über das Internet realisiert, so kann der Nutzer die Grafik-Software vom Internet herunterladen und dann auf seinem eigenen Rechnersystem zur Bearbeitung der zur Verfügung gestellten Ursprungsbilder verwenden. Aufgrund der Möglichkeit, handelsübliche Grafik-Software zu verwenden, ist es, wenn überhaupt, nur bedingt erforderlich, für die Realisierung der Erfindung eine spezielle Software zu entwickeln. Ebenfalls ist durch die Verwendung handelsüblicher Software zumeist gewährleistet, dass ein Herunterladen dieser Software aus dem Internet im Hinblick auf die zu übertragende Datenmenge und damit im Hinblick auf die erforderliche Übertragungszeit in vertretbaren Grenzen bleibt.

Bei einer vorteilhaften Ausgestaltung der Erfindung werden die Veränderungen, Kombinationen, Ergänzungen, usw. auf dem Personalcomputer oder im Internet als dem erstellten Bildmotiv zugehörige Bild- und/oder Prozessdaten gespeichert.

Eine derartige Speicherung kann auf zweierlei Arten erfolgen. Einerseits ist es möglich, dass sämtliche zeitlich aufeinanderfolgende Veränderungen, Kombinationen, Ergänzungen, usw. abgespeichert werden. Damit ist es möglich, diesen zeitlichen Ablauf, der auf der Grundlage der niedrigen Auflösung durchgeführt worden ist, in einem späteren Zeitpunkt auf der Grundlage einer hohen Auflösung zu wiederholen. Insgesamt entsteht dadurch die Möglichkeit, das von dem Nutzer erstellte und damit erwünschte Bildmotiv in einem späteren Zeitpunkt in der hohen Auflösung herzustellen. Andererseits ist es möglich, nicht den zeitlichen Ablauf der Veränderungen usw. abzuspeichern, sondern nur das letztendlich von dem Nutzer erstellte Bildmotiv. Dieses Bildmotiv weist dann - wie bereits erläutert wurde - die niedrige Auflösung auf. In einem späteren Schritt kann dann das von dem Nutzer erstellte und abgespeicherte Bildmotiv von der niedrigen Auflösung in eine hohe Auflösung übertragen werden. Somit ist es auch auf diese Weise möglich, das von dem Nutzer erwünschte Bildmotiv mit der qualitativ hochwertigen hohen Auflösung auszudrucken.

Die Abspeicherung der Bild- und/oder Prozessdaten erfolgt dabei in Abhängigkeit von der Realisierung der Erfindung. Ist die Erfindung auf einem stand-alone-Personalcomputer vorhanden, so erfolgt die Abspeicherung der Bild- und/oder Prozessdaten auf diesem Personalcomputer. Erfolgt die Durchführung bzw. Realisierung der Erfindung jedoch über das Internet, so werden die zu dem Bildmotiv zugehörigen Bildund/oder Prozessdaten auf dem Internet, also auf irgendeinem Rechnersystem des Internets abgespeichert.

Besonders vorteilhaft ist es, wenn der Anbieter auf dem Personalcomputer oder über das Internet eine Mehrzahl von Bildmaterialien, z.B. Papier, Leinwand, Textil usw. zur Auswahl zur Verfügung stellt, wenn der Nutzer auf dem Personalcomputer oder über das Internet ein erwünschtes Bildmaterial auswählt, und wenn die zu dem ausgewählten Bildmaterial zugehörigen Materialdaten an den Anbieter oder den Dritten zur Herstellung des Bildmotivs übermittelt werden.

Auf diese weise ist es möglich, dass der Nutzer aus der Mehrzahl der zur Verfügung gestellten Bildmaterialien das seinen Vorstellungen entsprechende Bildmaterial auswählt und dem Anbieter bzw. dem Dritten mitteilt. Diese Auswahl, wie auch deren Übermittlung kann dabei wieder unmittelbar an dem stand-alone-Personalcomputer durchgeführt werden, oder es erfolgt die Auswahl und deren Übermittlung über das Internet.

Ebenfalls ist es besonders vorteilhaft, wenn der Nutzer auf den Personalcomputer oder über das Internet eine erwünschte Form und/oder erwünschte Abmessungen des herzustellenden Bildmotivs, auswählt, und wenn die zugehörigen Größendaten an den Anbieter oder den Dritten zur Herstellung des Bildmotivs übermittelt werden.

Auf diesem. Wege wird dem Nutzer die weitere Möglichkeit eröffnet, auch die Form des von ihm erwünschten Bildmotivs, wie auch dessen Abmessungen frei zu bestimmen. Die Auswahl dieser Form bzw. der Abmessungen kann dann wiederum unmittelbar an dem stand-alone-Personalcomputer oder über das Internet erfolgen.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels eines erfindungsgemäßen Verfahrens zur Herstellung eines Bildmotivs auf einem Bildmaterial.

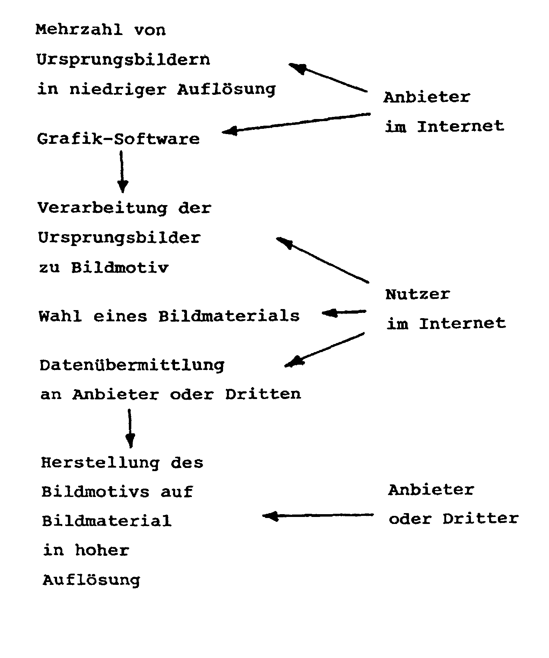

Das Ausführungsbeispiel der Figur 1 bezieht sich auf ein im Internet realisiertes Verfahren. Es wird jedoch ausdrücklich darauf hingewiesen, dass das beschriebene Verfahren auch unabhängig vom Internet, bspw. auf einem stand-alone-Personalcomputer vorhanden sein kann bzw. ausgeführt werden kann. Dabei kann das Verfahren auf dem stand-alone-Personalcomputer, bereits installiert sein, oder das Verfahren ist in der Form von Daten und/oder Programmen auf einem Datenträger, z.B. auf einer CD abgespeichert.

Bei dem in der Figur dargestellten Verfahren werden von einem Anbieter eine Mehrzahl von Ursprungsbildern in niedriger Auflösung im Internet zur Verfügung gestellt. Dies kann bspw. dadurch erfolgen, dass der Anwender die Ursprungsbilder auf einer sogenannten Website oder Internetseite abspeichert, so dass jedermann auf diese Ursprungsbilder zugreifen kann. Die Ursprungsbilder sind dabei in einer niedrigen Auflösung abgespeichert, wobei das Datei-Format der Ursprungsbilder unerheblich ist. Ggf. ist es möglich, dass der Anbieter die Ursprungsbilder in verschiedenen Datei-Formaten jeweils in niedriger Auflösung im Internet zur Verfügung stellt.

Bei den Ursprungsbildern kann es sich um jegliche Art von Bildern handeln, egal woher diese kommen. So können die Ursprungsbilder aus dem Bereich des Fernsehens, der Fotografie, der Kunst, des Sports, von Spielen und dergleichen stammen. Bei den Ursprungsbildern kann es sich auch um Bildsequenzen handeln. Gegebenenfalls können auch von dem Nutzer eigene Bilder, z.B. Fotos, als Ursprungsbilder eingebracht werden.

Des Weiteren stellt der Anbieter eine Grafik-Software zur Verfügung. Dies kann dadurch erfolgen, dass der Anbieter die Grafik-Software auf der genannten Internetseite abspeichert, so dass wiederum jedermann diese Grafik-Software herunterladen und damit verwenden kann.

In einem beliebigen Zeitpunkt kann nunmehr ein Nutzer auf die Internetseite des Anbieters zugreifen. Der Nutzer kann von dieser Internetseite eines oder mehrere der Ursprungsbilder auf seinen eigenen Personalcomputer herunterladen. Ebenfalls kann der Nutzer die angebotene Grafik-Software auf seinen eigenen Personalcomputer herunterladen.

Auf dieser Grundlage ist es dem Nutzer möglich, auf seinem eigenen Personalcomputer die heruntergeladenen Ursprungsbilder mit Hilfe der Grafik-Software zu bearbeiten. Dabei ist es möglich, dass der Nutzer die Ursprungsbilder verändert, kombiniert, ergänzt, o.dgl.. Mit Hilfe der Grafik-Software ist es damit dem Nutzer möglich, aus den angebotenen Ursprungsbildern ein völlig neues Bildmotiv zu erstellen, das seinen persönlichen Vorstellungen entspricht. Da die angebotenen Ursprungsbilder nur in der niedrigen Auflösung vorhanden sind, ist das letztendlich von dem Nutzer erstellte Bildmotiv ebenfalls nur in der niedrigen Auflösung vorhanden.

Bei der Verarbeitung der Ursprungsbilder werden die einzelnen Schritte der Verarbeitung abgespeichert. Dies bedeutet, dass jede Veränderung, Kombination, Ergänzung o.dgl., die von dem Nutzer an dem oder den Ursprungsbildern durchgeführt wird, programmintern dokumentiert, auf dem Personalcomputer des Nutzers und/oder auf einem Rechner des Internets als separater Bearbeitungsschritt abgespeichert wird. Ist dann letztendlich das von dem Nutzer erwünschte Bildmotiv erstellt, so liegt dieses Bildmotiv einerseits in der Form der verwendeten Ursprungsbilder in niedriger Auflösung, sowie andererseits in der Form einer zeitlichen Abfolge bzw. Schritte der durchgeführten Veränderungen, Kombinationen, Ergänzungen usw. vor.

Ebenfalls kann der Nutzer dasjenige Bildmaterial auswählen, das er für die Herstellung seines erstellten Bildmotivs wünscht. Hierzu ist es möglich, dass von dem Anbieter eine Reihe von zur Verfügung stehenden Bildmaterialien dem Nutzer über das Internet angeboten werden. Aus diesen Bildmaterialien kann dann der Nutzer das von ihm erwünschte Bildmaterial auswählen.

In ähnlicher Weise ist es möglich, dass der Nutzer die Form und/oder die Abmessungen des von ihm erwünschten Bildmotivs auswählt. Hierzu können von dem Anbieter bestimmte Formen, bspw. rechteckige Formen, dreieckige oder elliptische Formen o.dgl. vorgegeben werden. Aus diesen Formen kann dann der Nutzer die von ihm erwünschte Form auswählen. Ebenfalls können von dem Anbieter bestimmte Abmessungen vorgegeben werden. Diese Abmessungen können dann von dem Nutzer übernommen oder nach seinen Wünschen verändert werden.

Die nunmehr vorliegenden Daten werden dann über das Internet an den Anbieter oder einen Dritten übermittelt. Bei diesen Daten handelt es sich einerseits um die Bild- und/oder Prozessdaten, die sich aus den Daten der, vom Nutzer zur Bearbeitung ausgewählten Ursprungsbilder in niedriger Auflösung sowie aus den Daten der zeitlichen Abfolge der Veränderungen durch den Nutzer zusammensetzen. Andererseits handelt es sich dabei um Materialdaten, die das Bildmaterial repräsentieren, das der Nutzer ausgewählt hat. Schließlich handelt es sich um Größendaten, die die Form und/oder die Abmessungen repräsentieren, die von dem Nutzer dem erstellten Bildmotiv zugeordnet worden sind. Alle diese Daten werden dann - wie gesagt - über das Internet an den Anbieter oder an einen Dritten übermittelt.

Auf der Grundlage der übermittelten Daten wird dann von dem Anbieter oder dem Dritten eine qualitativ hochwertige Reproduktion des von dem Nutzer erstellten Bildmotivs hergestellt. Zu diesem Zweck liegen bei dem Anbieter oder dem Dritten die Ursprungsbilder in einer hohen Auflösung vor. Der Anbieter oder der Dritte führt daraufhin auf der Grundlage der übermittelten Bild- und/oder Prozessdaten all jene Veränderungen, Kombinationen, Ergänzungen usw. in gleicher Weise durch, die zuvor von dem Nutzer ebenfalls durchgeführt worden sind. Der Anbieter oder der Dritte führt jedoch diese Veränderungen nicht auf der Grundlage der niedrigen Auflösung durch, sondern auf der Grundlage der hohen Auflösung. Dadurch entsteht letztendlich das von dem Nutzer erstellte Bildmotiv nicht in der niedrigen Auflösung, sondern in der hohen Auflösung.

Auf der Grundlage des Bildmotivs in der hohen Auflösung erzeugt dann der Anbieter oder der Dritte einen Ausdruck bzw. eine Reproduktion in einer qualitativ hochwertigen Ausführung. Dieser Ausdruck bzw. die Reproduktion erfolgt dabei in derjenigen Form und mit denjenigen Abmessungen, die dem Anbieter oder dem Dritten ebenfalls von dem Nutzer übermittelt worden sind. Schließlich erfolgt der Ausdruck bzw. die Reproduktion auf demjenigen Bildmaterial, das der Nutzer ausgewählt und an den Anbieter bzw. an den Dritten übermittelt hat.

Insgesamt ist es mit dem beschriebenen Verfahren möglich, zuerst mit einem üblichen Personalcomputer aus einer Mehrzahl von Ursprungsbildern mit Hilfe einer Grafik-Software ein erwünschtes Bildmotiv in niedriger Auflösung zu erstellen. Aus diesem Bildmotiv kann dann ein Ausdruck in einer hohen Auflösung hergestellt werden. Der Ausdruck kann dabei in einer erwünschten Form bzw. Größe und auf einem erwünschten Bildmaterial erfolgen.

## Patentansprüche

1. Verfahren zur Herstellung eines Bildmotivs auf einem Bildmaterial, z.B. auf Papier, Textil, Leinwand, usw., mit den folgenden Schritten:
ein Anbieter stellt auf einem Personalcomputer oder im Internet eine Mehrzahl von Ursprungsbildern in einer niedrigen Auflösung zur Verfügung,
ein Nutzer erstellt auf dem Personalcomputer oder über das Internet aus mehreren Ursprungsbildern nach seinen persönlichen Vorstellungen ein neues Bildmotiv in niedriger Auflösung,
dem neu erstellten Bildmotiv zugehörige Bild- und/oder Prozessdaten werden an den Anbieter oder an einen Dritten zur Herstellung des neu erstellten Bildmotivs übermittelt,
der Anbieter oder der Dritte stellt das von dem Nutzer neu erstellte Bildmotiv auf der Grundlage der übermittelten Bild- und/oder Prozessdaten sowie von Originaldaten hoher Auflösung der dem Nutzer angebotenen Ursprungsbilder in einer hohen Auflösung auf dem Bildmaterial her.

2. Verfähren nach Anspruch 1, mit dem weiteren Schritt:
der Anbieter stellt dem Nutzer auf dem Personalcomputer oder über das Internet eine Software zur Verfügung, mit der die Ursprungsbilder zur Erstellung des Bildmotivs verändert, kombiniert, ergänzt, usw. werden können.

3. Verfahren nach Anspruch 2, mit dem weiteren Schritt:
die Veränderungen, Kombinationen, Ergänzungen, usw. werden auf dem Personalcomputer oder im Internet als die dem erstellten Bildmotiv zugehörigen Bild- und/oder Prozessdaten gespeichert.

4. Verfahren nach einem der Ansprüche 1 bis 3, mit den weiteren Schritten:
der Anbieter stellt auf dem Personalcomputer oder über das Internet eine Mehrzahl von Bildmaterialien, z.B. Papier, Leinwand, Textil usw. zur Verfügung,
der Nutzer wählt auf dem Personalcomputer oder über das Internet ein erwünschtes Bildmaterial aus,
zu dem ausgewählten Bildmaterial zugehörige Materialdaten werden an den Anbieter oder den Dritten zur Herstellung des Bildmotivs übermittelt.

5. Verfahren nach einem der Ansprüche 1 bis 4, mit dem weiteren Schritt:
der Nutzer wählt auf dem Personalcomputer oder über das Internet eine erwünschte Form und/oder erwünschte Abmessungen des herzustellenden Bildmotivs aus,
zugehörige Größendaten werden an den Anbieter oder den Dritten zur Herstellung des Bildmotivs übermittelt.

6. Verfahren nach einem der Ansprüche 1 bis 5, **dadurch gekennzeichnet, daß** die Übermittlung von Daten über das Internet durchgeführt wird.

## Claims

1. Method for manufacturing an image motif on an image material, for instance, on paper, textile, a screen, etc., having the following steps:
a provider makes a plurality of original images available on a personal computer or on the internet at a low resolution,
a user creates a new image motif at low resolution on the personal computer or over the internet according to his personal concept from a plurality of original images,
image and/or process data associated with the newly created image motif are transmitted to the provider or to a third party for manufacturing of the newly created image motif,
the provider or third party manufactures at high resolution on the image material the image motif newly created by the user on the basis of the transmitted image and/or process data and from original high resolution data of the original images offered to the user.

2. Method according to Claim 1, having the further step:
the provider makes software available to the user on the personal computer or over the internet with which the original images may be amended, combined, enhanced, etc., for creating the image motif.

3. Method according to Claim 2, having the further step:
the amendments, combinations, enhancements, etc., are stored on the personal computer or on the internet as image and/or process data associated with the created image motif.

4. Method according to one of the claims 1 to 3, having the further steps:
the provider makes available on the personal computer or over the internet a plurality of image materials, e.g. paper, a screen, textile, etc.,
the user selects on the personal computer or over the internet a required image material,
material data associated with the selected image material are transmitted to the provider or the third party for manufacturing of the image motif.

5. Method according to one of the claims 1 to 4, having the further step:
on the personal computer or over the internet the user selects a required form and/or required dimensions for the image motif to be manufactured,
associated size data are transmitted to the provider or the third party for manufacturing of the image motif.

6. Method according to one of the claims 1 to 5, **characterised in that** the transmission of data is carried out over the internet.

## Revendications

1. Procédé pour la réalisation d'un motif d'image sur un matériau de support d'image, par exemple sur du papier, un textile, un écran de projection, etc., présentant les étapes suivantes :
un fournisseur met à disposition sur un ordinateur personnel ou sur Internet, un grand nombre d'images initiales dans une version de faible résolution,
un utilisateur élabore sur un ordinateur personnel ou via Internet, à partir de plusieurs images initiales, un nouveau motif d'image, selon ses souhaits personnels, dans une version de faible résolution,
des données d'image et/ou de process affectées au motif d'image nouvellement élaboré, sont transmises au fournisseur ou à un tiers pour la réalisation du motif d' image nouvellement élaboré,
le fournisseur ou le tiers réalise sur le matériau de support d'image, dans une version de résolution élevée, le motif d'image nouvellement élaboré par l'utilisateur, sur la base des données d'image et/ou de process transmises ainsi que de données originales de résolution élevée.

2. Procédé selon la revendication 1, présentant l'étape supplémentaire suivante :
le fournisseur met à disposition de l'utilisateur, sur l'ordinateur personnel ou via Internet, un logiciel à l'aide duquel les images initiales, en vue de l'élaboration du motif d'image, peuvent être modifiées, combinées, complétées, etc..

3. Procédé selon la revendication 2, présentant l'étape supplémentaire suivante :
les modifications, combinaisons, compléments, etc. sont mémorisés dans l'ordinateur personnel ou sur Internet, en tant que données d'image et/ou de process associées au motif d'image élaboré.

4. Procédé selon l'une des revendications 1 à 3, présentant les étapes supplémentaires suivantes :
le fournisseur met à disposition sur l'ordinateur personnel ou via Internet, plusieurs matériaux de support d'image, tels que par exemple du papier, un textile, un écran de projection, etc.,
l'utilisateur choisit sur l'ordinateur personnel ou via Internet, un matériau de support d'image souhaité,
des données de matériau associées au matériau de support d'image choisi, sont transmises au fournisseur ou au tiers pour la réalisation du motif d'image.

5. Procédé selon l'une des revendications 1 à à 4, présentant l'étape supplémentaire suivante :
l'utilisateur choisit sur l'ordinateur personnel ou via Internet, une forme souhaitée et/ou des dimensions souhaitées du motif d'image à réaliser,
des données de grandeur associées étant transmises au fournisseur ou au tiers pour la réalisation du motif d'image.

6. Procédé selon l'une des revendications 1 à 5, **caractérisé en ce que** la transmission de données est effectuée via Internet.
